Europäisches Patentamt

European Patent Office

Office européen des brevets

(11) Publication number: **0 341 791 B1**

# EUROPEAN PATENT SPECIFICATION

(45) Date of publication of patent specification: **28.07.93**

(51) Int. Cl.⁵: **C04B 24/16**, C07G 17/00, C04B 24/22

(21) Application number: **89201163.6**

(22) Date of filing: **08.05.89**

The file contains technical information submitted after the application was filed and not included in this specification

(54) **Concrete composition containing a superfluidifying additive.**

(30) Priority: **13.05.88 IT 2056288**

(43) Date of publication of application:
**15.11.89 Bulletin 89/46**

(45) Publication of the grant of the patent:
**28.07.93 Bulletin 93/30**

(84) Designated Contracting States:
**AT BE CH DE ES FR GB GR LI LU NL SE**

(56) References cited:
**EP-A- 0 200 471**
**DE-A- 2 138 637**
**GB-A- 2 159 536**
**US-A- 3 277 162**
**US-A- 4 704 415**

**DATABASE WPIL Derwent no. 86-243719 (37), 1986, Derwent Publications Ltd., London, GB; & RO - A - 89196 (COMB. CHIM. FAGARAS et al.) 13.02.1984**

(73) Proprietor: **ENIRICERCHE S.p.A.**
**Corso Venezia 16**
**I-20121 Milan(IT)**

Proprietor: **SNAMPROGETTI S.p.A.**
**Corso Venezia 16**
**I-20121 Milan(IT)**

(72) Inventor: **Prevedello Aldo**
**Via Agadir 16A**
**I-20097 San Donato Milanese Milan(IT)**
Inventor: **Platone, Edoardo**
**Piazza Vittorio Veneto 7**
**I-14100 Asti(IT)**
Inventor: **Ercolani, Dario**
**Via Dante Alighieri 57**
**I-61032 Fano Pesaro(IT)**
Inventor: **Donati, Elio**
**Via Gabrielli 97**
**I-61032 Fano Pesaro(IT)**

(74) Representative: **Roggero, Sergio et al**
**Ing. Barzanò & Zanardo Milano S.p.A. Via Borgonuovo 10**
**I-20121 Milano (IT)**

EP 0 341 791 B1

**Description**

This invention relates to a concrete composition containing a superfluidifying additive.

It is known in the art to use additives which are added to the concrete before or during mixing.

These include chemical additives, aerating agents and others. Their effects on the concrete are positive, including a smaller water requirement, improved workability, controlled setting and hardening and increased durability.

In particular, superfluidifying agents are increasingly widely used, especially in the form of water-soluble salts of the products of condensation between formaldehyde and melamine sulphonate or naphthalene sulphonate. Said superfluidifying additives result in improved cement dispersion with the effect of making the mix more fluid.

For equal water/cement ratios this improved workability can facilitate the laying of concrete castings and can also allow vibration to be limited or dispensed with. Alternatively, it becomes possible to increase the mechanical strength of the concrete by reducing its water/cement ratio while maintaining equal workability of the mix.

USA patent 3,277,162 describes the ammonium, sodium, potassium and calcium salts of the products of condensation between formaldehyde and napthalenesulphonic acid, which can inter alia be used to reduce water losses from cement compositions injected into oil wells.

However, the superfluidifying additives of the known art are costly and their preparation process is costly and difficult, with the result that there is the need for superfluidifying additives which are more economical and easier to prepare. There is also a felt need for superfluidifying additives able to further improve the characteristics of concrete compositions and of the concretes obtainable from said compositions.

It has now been found that such requirements can be satisfied by the concrete compositions of the present invention, which contain hydraulic cement, inerts, water and a superfluidifying additive, said compositions being characterised in that said superfluidifying additive is the salification product, in the form of an alkaline metal, alkaline earth metal or ammonium salt, of the sulphonated and oxidised products resulting from the reaction between sulphur trioxide and fuel oil deriving from steam cracking.

Fuel oil deriving from steam cracking is the residual hydrocarbon fraction in the production of ethylene and other lower hydrocarbons by pyrolysis of naphthas and gas oils. This hydrocarbon fraction has a high aromatic compounds content, at least 50 wt% of these being bicyclic or polycyclic condensed ring aromatic compounds in accordance with ASTM D-3239-81.

The superfluidifying additive used in the concrete composition of the present invention is obtained by reacting liquid or gaseous sulphur trioxide with the hydrocarbon fraction operating with a weight ratio of between 0.5/1 and 2.0/1, and preferably of the order of 0.8/1-1.2/1.

This fraction is preferably conducted by:
- dissolving the hydrocarbon fraction in a non-sulphonatable organic solvent;
- bringing the solution thus obtained into contact with liquid or gaseous sulphur trioxide, respecting the aforesaid ratios between the two reactants;
- reacting them together at a temperature of between 90 and 120°C for a time of between 0.5 and 3 hours, removing the sulphur dioxide as it forms during the reaction;
- after cooling, neutralizing the reaction products with an alkaline metal base, alkaline earth metal base or ammonia;
- recovering the additive from the neutralization products by eliminating the organic solvent and at least part of the water.

For further details of the sulphonation procedure reference should be made to British Patent N. 2 159 536.

In treating the steam-cracked fuel oil with sulphur trioxide not only is there a sulphonation reaction but also an oxidation reaction as demonstrated by the evolvement of sulphur dioxide during the course of the reaction. The additive obtained on treating the reaction products with an alkaline metal base, alkaline earth metal base or ammonia is in all cases a solid containing a preponderant quantity (60-80% by weight) of organic sulphonate and lesser quantities of (10-30% by weight) of alkaline, alkaline earth or ammonium sulphate, together with possible residual moisture. The organic sulphonate can be separated from the reaction mixture, but it is preferable to use the crude reaction product directly.

Generally the compositions of the present invention have a water/cement ratio of between 0.4/1 and 0.6/1 by weight and a cement/inerts ratio of between 1/3 and 1/6 by weight, the superfluidifying additive being present in a weight concentration of between 0.3 and 3% of the cement, said percentage relating to the content of organic sulphonate in the additive.

2

In the preferred embodiment the water/cement ratio varies from 0.42/1 to 0.47/1, the cement/inerts weight ratio varies from 1/4.5 to 1/5.5 and the superfluidifying additive concentration varies from 0.5 to 2.0% by weight of the cement, again referred to the organic sulphonate.

In preparing the compositions of the present invention the normal hydraulic cements such as Portland cement can be used, as can the normal inerts such as sand, gravel, crushed stone and the like. The compositions of the present invention can also contain an antifoaming agent to reduce concrete porosity. For this purpose the normal silicone, alcohol or fatty acid derivative antifoaming agents can be used in a quantity of up to 10% by weight of the superfluidifying additive.

The superfluidifying additive of the present invention is economical because of the raw materials used, and is obtained by a simple and convenient process.

When used in modest concentrations, such an additive gives the concrete compositions improved workability with self-compacting and self-levelling characteristics.

The concretes obtained from said compositions have high strength and durability.

In the experimental examples given hereinafter the following superfluidifying additives are used.:

- Additive A: obtained by sulphonating fuel oil from steam cracking with sulphur trioxide using a weight ratio of sulphur trioxide to fuel oil of 0.66/1 and neutralizing the obtained sulphonation product with sodium hydroxide. Such an additive has the following composition:

| organic sulphonate | 79.7% by weight |
| sodium sulphate | 12.7% by weight |
| water | 7.6% by weight |

- Additive B: obtained as indicated above but using a weight ratio of sulphur trioxide to fuel oil of 0.89/1. Such an additive has the following composition:

| organic sulphonate | 76.6% by weight |
| sodium sulphate | 15.1% by weight |
| water | 8.3% by weight |

- Additive C: obtained as indicated above but using a weight ratio of sulphur trioxide to fuel oil of 1.45/1. Such an additive has the following composition:

| organic sulphonate | 71.8% by weight |
| sodium sulphate | 19.4% by weight |
| water | 8.8% by weight. |

The steam cracking fuel oil used for preparing the fluidifying additives A, B and C has the following characteristics:

| | | |
|---|---|---|
| specific gravity (15°C) | | 1.075 |
| viscosity (50°C; cst) | | 23.8 |
| Elementary analysis in % by weight: | C | 92.4 |
| | H | 6.7 |
| | S | 0.1 |
| | N | <0.3 |
| Water (Karl Fischer) (% by weight) | | 0.2 |

Chromatographic separation in % by weight:

| | |
|---|---|
| saturateds | 2.6 |
| polars | 13.7 |
| aromatics | 78.6 |

The workability characteristics of the concrete mixes are determined in Example 1 via the characteristics of the corresponding cement pastes. This if for simplicity reasons, as the data obtained are transferable to the concrete mixes.

EXAMPLE 1

200 g of Portland cement 325, water and superfluidifying additive are fed into a bladed mixer in the weight ratio of 100:25:0.5. The latter value relates to the organic sulphonate content of the additives A, B and C.

This feed is stirred in the bladed mixer for 120 seconds at a rotational speed of 60 r.p.m. and a temperature of 20°C.

The resultant mixture is used to prepare cylinders of 60 mm height and 35 mm diameter, the area of the resultant spread then being measured. The test is repeated 5 times for each sample.

For comparison purposes the test is repeated using an equal quantity of a commercial fluidifying additive (additive D) formed by salifying into sodium salt form the products of the reaction between formaldehyde and naphthalene sulphonate.

The results relative to workability are given in Table 1, in which the workability of the composition containing the comparison additive (D) is given the value of 100 in conventional manner.

TABLE 1

| Composition | Relative workability |
|---|---|
| Additive (A) | 100 |
| Additive (B) | 135 |
| Additive (C) | 117 |
| Additive (D) | 100 |

EXAMPLE 2

The following are fed into a mixer:
10 kg of Portland cement 325
30 kg of dry gravel
20 kg of sand

4

EP 0 341 791 B1

4.17 kg of water
0.405 kg of an aqueous solution containing 17% of additive (B) evaluated with reference to the organic sulphonate contained in the additive.

In this composition the water/cement weight ratio is equal to 0.45/1 and the additive quantity is 0.69 wt% of the cement.

The feed is mixed for 3 minutes and a cone is then prepared for a slump test operating in accordance with the UNI 7163 standard. A 21 cm slump is obtained.

For comparison purposes the aforesaid composition is prepared without the fluidifying additive, a 1 cm slump then being obtained.

EXAMPLE 3

The following concrete compositions are prepared operating as in Example 2.

Test 1

10 kg of Portland cement 325;
30 kg of dry gravel;
20 kg of sand;
5 kg of water.

Test 2

10 kg of Portland cement 325;
30 kg of dry gravel;
20 kg of sand;
4.5 kg of water;
0.70% of the cement weight as superfluidifying additive (B) (evaluated as organic sulphonate);
0.06% of the cement weight as alcoholic foaming agent.

Test 3

10 kg of Portland cement 325;
30 kg of dry gravel;
20 kg of sand;
4.3 kg of water;
1.40% of the cement weight as superfluidifying additive (B) (evaluated as organic sulphonate);
0.12% of the cement weight as alcoholic foaming agent.

The slump test is carried out on these compositions, the result being expressed in cm and evaluated in accordance with UNI 7163. The following values are obtained: test 1 = 6 cm; test 2 = 5 cm; test 3 = 6 cm.

The compositions are used to form concrete cubes of size 16 x 16 x 16 cm operating in accordance with UNI 6132.

These cubes are cured in water at 20°C for 28 days after which their compressive strength is determined.

The results of the three tests repeated three times each are as follows:
Test 1 = 320, 324 and 318 $kg/cm^2$;
Test 2 = 404, 392 and 405 $kg/cm^2$;
Test 3 = 488, 480 and 463 $kg/cm^2$.

**Claims**
**Claims for the following Contracting States : AT, BE, CH, DE, FR, GB, GR, LI, LU, NL, SE**

1. A concrete mixture consisting of a hydraulic cement, fine aggregates, coarse aggregates, water and a superfluidizer, characterized in that the superfluidizer is selected from the alkali metal-, alkaline earth metal- and ammonium salts of the sulphonated and oxidized products prepared by reacting, with sulphur trioxide, the fuel oil deriving from steam cracking, which is the residual hydrocarbon fraction in the production of ethylene and other lower hydrocarbons by pyrolysis of naphthas and gas oils.

5

**2.** Concrete mixture according to Claim 1, wherein the sulphonation and oxidation reaction is carried out at a weight ratio of sulphur trioxide to said fuel oil of from 0,5 to 2:0:1.

**3.** Concrete mixture according to Claim 2, wherein the weight ratio of sulphur trioxide to said fuel oil is of from 0,8:1 to 1,2:1.

**4.** Concrete mixture according to Claim 1, wherein the superfluidizer consists of a predominant fraction of organic sulphonates, an alkali metal-, alkaline earth metal- or ammonium sulphate and water.

**5.** Concrete mixture according to Claim 4, wherein the superfluidizer contains, on a weight basis:
from 79,7% to 71,8% of organic sulphates;
from 12,7% to 19,4% of sodium sulphate, and
from 7,6% to 8,8% of water.

**6.** Concrete mixture according to Claim 1, wherein:
the water-to-cement weight ratio is from 0,4:1 to 0,6:1;
the cement-to-aggregates weight ratio is from 1:3 to 1:6,
the weight percentage proportion of the organic sulphonates contained in the superfuidizer relative to the cement being from 0,3% to 3%.

**7.** Concrete mixture according to Claim 6, wherein:
the water-to cement weight ratio is from 0,42:1 to 0,47:1;
the cement-to-aggregates weight ratio is from 1:4,5 to 1:5,5,
the weight percentage proportion of the organic sulphonates contained in the superfuidizer relative to the cement being from 0,5% to 2%.

**8.** Concrete mixture according to Claim 1, further containing an antifoaming agent selected from the derivatives of silicone, alcohols and fatty acids.

**9.** Concrete mixture according to Claim 1, wherein the hydraulic cement is Portland cement.

**Claims for the following Contracting State : ES**

**1.** Process for preparing a concrete mixture by combining together a hydraulic cement, fine aggregates, coarse aggregates, water and a superfluidizer, characterized in that the superfluidizer is selected from the alkali metal-, alkaline earth metal- and ammonium salts of the sulphonated and oxidized products prepared by reacting, with sulphur trioxide, the fuel oil deriving from steam cracking, which is the residual hydrocarbon fraction in the production of ethylene and other lower hydrocarbons by pyrolysis of naphthas and gas oils.

**2.** Process according to Claim 1, wherein the sulphonation and oxidation reaction is carried out at a weight ratio of sulphur trioxide to said fuel oil of from 0,5 to 2:0:1.

**3.** Process according to Claim 2, wherein the weight ratio of sulphur trioxide to said fuel oil is of from 0,8:1 to 1,2:1.

**4.** Process according to Claim 1, wherein the superfluidizer consists of a predominant fraction of organic sulphonates, an alkali metal-, alkaline earth metal- or ammonium sulphate and water.

**5.** Process according to Claim 4, wherein the superfluidizer contains, on a weight basis:
from 79,7% to 71,8% of organic sulphates;
from 12,7% to 19,4% of sodium sulphate, and
from 7,6% to 8,8% of water.

**6.** Process according to Claim 1, wherein:
the water-to-cement weight ratio is from 0,4:1 to 0,6:1;
the cement-to-aggregates weight ratio is from 1:3 to 1:6,
the weight percentage proportion of the organic sulphonates contained in the superfuidizer relative to the cement being from 0,3% to 3%.

7. Process according to Claim 6, wherein:
   the water-to cement weight ratio is from 0,42:1 to 0,47:1;
   the cement-to-aggregates weight ratio is from 1:4,5 to 1:5,5,
   the weight percentage proportion of the organic sulphonates contained in the superfuidizer relative to the cement being from 0,5% to 2%.

8. Process according to Claim 1, further containing an antifoaming agent selected from the derivatives of silicone, alcohols and fatty acids.

9. Process according to Claim 1, wherein the hydraulic cement is Portland cement.


**Patentansprüche**

**Patentansprüche für folgende Vertragsstaaten : AT, BE, CH, DE, FR, GB, GR, LI, LU, NL, SE**

1. Betongemisch, bestehend aus einem hydraulischen Zement, feinen Aggregaten, groben Aggregaten, Wasser und einem Verflüssiger, dadurch gekennzeichnet daß der Verflüssiger unter Alkalimetall-, Erdalkalimetall- und Ammoniumsalzen von sulfonierten und oxidierten Produkten ausgewählt ist, welche Produkte durch Umsetzen von aus dem Dampfcracken erhaltenem Heizöl, welches die verbleibende Kohlenwasserstofffraktion bei der Herstellung von Ethylen und anderen niederen Kohlenwasserstoffen durch Pyrolyse von Naphtha und Gasölen darstellt, mit Schwefeltrioxid hergestellt werden.

2. Betongemisch nach Anspruch 1, worin die Sulfonierungs- und Oxidationsreaktion bei einem Gewichtsverhältnis von Schwefeltrioxid zu dem genannten Heizöl von 0,5 bis 2,0:1 ausgeführt wird.

3. Betongemisch nach Anspruch 2, worin das Gewichtsverhältnis von Schwefeltrioxid zum genannten Heizöl von 0,8:1 bis 1,2:1 beträgt.

4. Betongemisch nach Anspruch 1, worin der Verflüssiger aus einer überwiegenden Fraktion von organischen Sulfonaten, einem Alkalimetall-, Erdalkalimetall- oder Ammoniumsulfat und Wasser besteht.

5. Betongemisch nach Anspruch 4, worin der Verflüssiger, bezogen auf das Gewicht,
   79,7 % bis 71,8 % an organischen Sulfonate
   12,7 % bis 19,4 % an Natriumsulfat und
   7,6 % bis 8,8 % Wasser
   enthält.

6. Betongemisch nach Anspruch 1, worin das Gewichtsverhältnis von Wasser zu Zement von 0,4:1 bis 0,6:1 beträgt; das Gewichtsverhältnis von Zement zu den Aggregaten von 1:3 bis 1:6 beträgt; der Gewichtsprozentanteil der im Verflüssiger enthaltenen organischen Sulfonate relativ zum Zement von 0,3 % bis 3 % beträgt.

7. Betongemisch nach Anspruch 6, worin das Gewichtsverhältnis von Wasser zu Zement von 0,42:1 bis 0,47:1 reicht; das Gewichtsverhältnis von Zement zu den Aggregaten von 1:4,5 bis 1:5,5 beträgt; der Gewichtsprozentanteil der im Verflüssiger enthaltenen organischen Sulfonate relativ zum Zement von 0,5 % bis 2 % beträgt.

8. Betongemisch nach Anspruch 1, welches ferner ein unter Silikonderivaten, Alkoholen und Fettsäuren ausgewähltes Antischaummittel umfaßt.

9. Betongemisch nach Anspruch 1, worin der hydraulische Zement Portlandzement ist.


**Patentansprüche für folgenden Vertragsstaat : ES**

1. Verfahren zur Herstellung eines Betongemisches durch Vereinigen von einem hydraulischen Zement, feinen Aggregaten, groben Aggregaten, Wasser und einem Verflüssiger, dadurch gekennzeichnet, daß der Verflüssiger unter Alkalimetall-, Erdalkalimetall- und Ammoniumsalzen von sulfonierten und oxidierten Produkten ausgewählt ist, welche Produkte durch Umsetzen von aus dem Dampfcracken erhaltenem Heizöl, welches die verbleibende Kohlenwasserstofffraktion bei der Herstellung von Ethylen und anderen niederen Kohlenwasserstoffen durch Pyrolyse von Naphtha und Gasölen darstellt, mit Schwefeltrioxid hergestellt werden.

2. Verfahren nach Anspruch 1, worin die Sulfonierungs- und Oxidationsreaktion bei einem Gewichtsverhältnis von Schwefeltrioxid zue dem genannten Heizöl von 0,5 bis 2,0:1 ausgeführt wird.

3. Verfahren nach Anspruch 2, worin das Gewichtsverhältnis von Schwefeltrioxid zum genannten Heizöl von 0,8:1 bis 1,2:1 beträgt.

4. Verfahren nach Anspruch 1, worin der Verflüssiger aus einer überwiegenden Fraktion von organischen Sulfonaten, einem Alkalimetall-, Erdalkalimetall- oder Ammoniumsulfat und Wasser besteht.

5. Verfahren nach Anspruch 4, worin der Verflüssiger, bezogen auf das Gewicht,
79,7 % bis 71,8 % an organischen Sulfonate
12,7 % bis 19,4 % an Natriumsulfat und
7,6 % bis 8,8 % Wasser
enthält.

6. Verfahren nach Anspruch 1, worin das Gewichtsverhältnis von Wasser zu Zement von 0,4:1 bis 0,6:1 beträgt; das Gewichtsverhältnis von Zement zu den Aggregaten von 1:3 bis 1:6 beträgt; der Gewichtsprozentanteil der im Verflüssiger enthaltenen organischen Sulfonate relativ zum Zement von 0,3 % bis 3 % beträgt.

7. Verfahren nach Anspruch 6, worin das Gewichtsverhältnis von Wasser zu Zement von 0,42:1 bis 0,47:1 reicht; das Gewichtsverhältnis von Zement zu den Aggregaten von 1:4,5 bis 1:5,5 beträgt; der Gewichtsprozentanteil der im Verflüssiger enthaltenen organischen Sulfonate relativ zum Zement von 0,5 % bis 2 % beträgt.

8. Verfahren nach Anspruch 1, welches ferner ein unter Silikonderivaten, Alkoholen und Fettsäuren ausgewähltes Antischaummittel umfaßt.

9. Verfahren nach Anspruch 1, worin der hydraulische Zement Portlandzement ist.

**Revendications**
**Revendications pour les Etats contractants suivants : AT, BE, CH, DE, FR, GB, GR, LI, LU, NL, SE**

1. Mélange de béton, constitué d'un ciment hydraulique, de granulats légers, de granulats lourds, d'eau et d'un superfluidifiant, caractérisé en ce que ce superfluidifiant est choisi parmi les sels de métal alcalin, de métal alcalino-terreux et d'ammonium des produits sulfonés et oxydés que l'on prépare en faisant réagir du trioxyde de soufre sur une huile combustible qui provient d'un vapocraquage et qui est la fraction d'hydrocarbures résiduels obtenue lors de la production d'éthylène et d'autres hydrocarbures inférieurs par pyrolyse de naphtas et de gasoils.

2. Mélange de béton conforme à la revendication 1, pour lequel la réaction de sulfonation et d'oxydation est effectuée avec un rapport pondéral du trioxyde de soufre à ladite huile combustible valant de 0,5:1 à 2,0:1.

3. Mélange de béton conforme à la revendication 2, pour lequel le rapport pondéral du trioxyde de soufre à ladite huile combustible vaut de 0,8:1 à 1,2:1.

4. Mélange de béton conforme à la revendication 1, dans lequel le superfluidifiant est constitué de sulfonates organiques en une proportion prédominante, d'un sulfate de métal alcalin, de métal alcalino-terreux ou d'ammonium, et d'eau.

5. Mélange de béton conforme à la revendication 4, dans lequel le superfluidifiant contient, en poids :
de 79,7 % à 71,8 % de sulfonates organiques,

de 12,7 % à 19,4 % de sulfate de sodium, et

de 7,6 % à 8,8 % d'eau.

**6.** Mélange de béton conforme à la revendication 1, dans lequel :

le rapport pondéral eau/ciment vaut de 0,4/1 à 0,6/1,

le rapport pondéral ciment/granulats vaut de 1/3 à 1/6, et

la proportion pondérale de sulfonates organiques contenus dans le superfluidifiant, par rapport au ciment, vaut de 0,3 % à 3 %.

**7.** Mélange de béton conforme à la revendication 6, dans lequel :

le rapport pondéral eau/ciment vaut de 0,42/1 à 0,47/1,

le rapport pondéral ciment/granulats vaut de 1/4,5 à 1/5,5, et

la proportion pondérale de sulfonates organiques contenus dans le superfluidifiant, par rapport au ciment, vaut de 0,5 % à 2 %.

**8.** Mélange de béton conforme à la revendication 1, qui contient en outre un agent antimousse choisi parmi les dérivés de silicone, les alcools et les acides gras.

**9.** Mélange de béton conforme à la revendication 1, dans lequel le ciment hydraulique est du ciment de Portland.

**Revendications pour l'Etat contractant suivant : ES**

**1.** Procédé pour préparer un mélange de béton, en combinant ensemble un ciment hydraulique, des granulats légers, des granulats lourds, de l'eau et un superfluidifiant, caractérisé en ce que ce superfluidifiant est choisi parmi les sels de métal alcalin, de métal alcalinoterreux et d'ammonium des produits sulfonés et oxydés que l'on prépare en faisant réagir du trioxyde de soufre sur une huile combustible qui provient d'un vapocraquage et qui est la fraction d'hydrocarbures résiduels obtenue lors de la production d'éthylène et d'autres hydrocarbures inférieurs par pyrolyse de naphtas et de gasoils.

**2.** Procédé conforme à la revendication 1, dans lequel la réaction de sulfonation et d'oxydation est effectuée avec un rapport pondéral du trioxyde de soufre à ladite huile combustible valant de 0,5:1 à 2,0:1.

**3.** Procédé conforme à la revendication 2, dans lequel le rapport pondéral du trioxyde de soufre à ladite huile combustible vaut de 0,8:1 à 1,2:1.

**4.** Procédé conforme à la revendication 1, dans lequel le superfluidifiant est constitué de sulfonates organiques en une proportion prédominante, d'un sulfate de métal alcalin, de métal alcalino-terreux ou d'ammonium, et d'eau.

**5.** Procédé conforme à la revendication 4, dans lequel le superfluidifiant contient, en poids :

de 79,7 % à 71,8 % de sulfonates organiques,

de 12,7 % à 19,4 % de sulfate de sodium, et

de 7,6 % à 8,8 % d'eau.

**6.** Procédé conforme à la revendication 1, dans lequel :

le rapport pondéral eau/ciment vaut de 0,4/1 à 0,6/1,

le rapport pondéral ciment/granulats vaut de 1/3 à 1/6, et

la proportion pondérale de sulfonates organiques contenus dans le superfluidifiant, par rapport au ciment, vaut de 0,3 % à 3 %.

**7.** Procédé conforme à la revendication 6, dans lequel :

le rapport pondéral eau/ciment vaut de 0,42/1 à 0,47/1,

le rapport pondéral ciment/granulats vaut de 1/4,5 à 1/5,5, et

la proportion pondérale de sulfonates organiques contenus dans le superfluidifiant, par rapport au ciment, vaut de 0,5 % à 2 %.

8.  Procédé conforme à la revendication 1, dans lequel on combine en outre un agent antimousse choisi parmi les dérivés de silicone, les alcools et les acides gras.

9.  Procédé conforme à la revendication 1, dans lequel le ciment hydraulique est du ciment de Portland.